# EUROPÄISCHE PATENTSCHRIFT

(11) **EP 3 683 155 B1**
(45) Veröffentlichungstag und Bekanntmachung des Hinweises auf die Patenterteilung: **10.11.2021**
(21) Anmeldenummer: 20162111.7
(22) Anmeldetag: 31.08.2016
(51) Int. Cl.: B65B 35/24, B65G 21/14, B65G 47/08

(54) **EINLEGER MIT EINEM DREHBAREN PORTIONIERBAND**
INSERT WITH A ROTATABLE PORTIONING BELT
DISPOSITIF D'INTRODUCTION DOTÉ D'UNE BANDE DE DIVISION EN PORTIONS

(30) Priorität: 08.09.2015 DE 102015217124
(43) Veröffentlichungstag der Anmeldung: 22.07.2020
(62) Teilanmeldung aus: 16760695.3
(73) Patentinhaber: GEA Food Solutions Germany GmbH, 35216 Biedenkopf-Wallau (DE)
(72) Erfinder: Kutter, Tobias, 87700 Memmingen (DE)
(74) Vertreter: Kutzenberger Wolff & Partner

(56) Entgegenhaltungen:
- EP-A1- 0 212 023
- EP-A2- 0 104 142
- US-A1- 2006 131 131

## Beschreibung

Die vorliegende Erfindung betrifft ein Verfahren zur Erzeugung beliebiger Portionen und Formate von Produkten, mit einem Aufreihband, das die Produkte fördert und an einer Übergabekante an ein Portionierband übergibt, mit dem die Produkte als entsprechende Portion und/oder in dem jeweiligen Format vorzugsweise weiter gefördert werden, wobei
- die Lage der Übergabekante relativ zum Portionierband mindestens in einer Richtung verändert wird und/oder
- die Lage des Portionierbandes mindestens in einer Richtung relativ zur Übergabekante bewegt wird und
- die erzeugten Formate in ein entsprechendes Format an Verpackungsmulden, die entlang einer Verpackungsmaschine transportiert werden, eingelegt werden.
Des Weiteren betrifft die vorliegende Erfindung eine entsprechende Vorrichtung.

Positioniersysteme für das Positionieren von Produkten, beispielsweise Lebensmitteln, sonstigen Gütern und dergleichen sind beispielsweise aus der US 2006/131131 A1 bekannt. Die Produkte werden dabei von einem Förderband beispielsweise an eine Verpackungslinie übergeben. Da diese Verpackungsanlagen heutzutage mehrreihig ausgeführt sind, muss ein ankommender Produktstrom zunächst in die Anzahl von Produktströmen zerteilt werden, die der Anzahl von Produktreihen der Verpackungslinie entspricht. Eine Verteilung eines einstreifigen Produktstromes auf eine mehrreihige Verpackungslinie ist derzeit dann möglich, wenn die gleiche Anzahl von Förderbändern mit ankommenden Produkten parallel über der jeweiligen Reihe der Verpackungslinie angeordnet ist, durch die die einzelnen Produkte oder Produktstapel dann in die jeweilige Reihe der Verpackungslinie eingelegt beziehungsweise von dem Förderband abgeworfen werden. Die Verfahren gemäß dem Stand der Technik haben jedoch oftmals den Nachteil, dass die Produkte und/oder Portionen für das Format der Verpackungsmaschine falsch ausgerichtet sind.

Es stellt sich deshalb die Aufgabe ein Verfahren zur Erzeugung beliebiger Portionen und Formate zur Verfügung zu stellen, die die Nachteile des Standes der Technik nicht aufweist.

Gelöst wird die Aufgabe mit einem Verfahren zur Erzeugung beliebiger Portionen und Formate von Produkten, mit einem Aufreihband, das die Produkte fördert und an einer Übergabekante an ein Portionierband übergibt, auf dem die Produkte als entsprechende Portion und/oder in dem jeweiligen Format vorzugsweise weiter gefördert werden, wobei
- die Lage der Übergabekante relativ zum Portionierband mindestens in einer Richtung verändert wird und/oder
- die Lage des Portionierbandes mindestens in einer Richtung relativ zur Übergabekante bewegt wird und
- die erzeugten Formate in ein entsprechendes Format an Verpackungsmulden, die entlang einer Verpackungsmaschine transportiert werden, eingelegt werden,
wobei das Portionsband vor dem Einlegen der Portionen entlang einer Kulisse und/ oder einer Hebelkinematik gedreht wird.

Eine Portion im Sinne der Erfindung ist jede Anordnung, in der Produkte, insbesondere Lebensmittel, in einem bestimmten Portionsbild arrangiert werden. Beispielhaft jedoch nicht einschränkend für mögliche Portionsbilder seien hier der Stapel, der Schindel in Längs- und in Querrichtung jeweils mit und ohne Überlappung, Zick-Zack-Muster sowie die terrassenförmige Reihe genannt.

Ein Format im Sinne der Erfindung ist die Anordnung, die die einzelnen Portionen zueinander einnehmen. In der Regel richtet sich das Format der Portionen nach der Anordnung der Verpackungsmulden einer nachfolgenden Verpackungsmaschine, in die die Portionen abgelegt werden und/oder dem Takt, mit dem die Verpackungsmulden weitertransportiert werden. Vorzugsweise werden die Produkte in parallelen Produktreihen abgelegt.

Erfindungsgemäß wird ein Verfahren zur Erzeugung beliebiger Portionen und Formate zur Verfügung gestellt, die aus einem Aufreihband und einem Portionierband besteht. Mit dem Aufreihband werden die Produkte oder Portionen gefördert und an einer Übergabekante an das Portionierband übergeben. Auf dem Portionierband werden die jeweils gewünschten Portionen bzw. Formate abgelegt. Vorzugsweise ist das Aufreihband ein Endlosband, besonders bevorzugt ein sogenanntes Shuttelband, bei dem zur Übergabe der Produkte und/oder Portionen die Vorderkante schnell zurückgezogen wird, damit die Produkte an der Übergabekante nicht kippen. Vorzugsweise kann die Lage der Übergabekante des Aufreihbandes relativ zu dem Portionierband verändert werden. Die Veränderung der Lage der Übergabekante des Aufreihbandes kann dadurch erzeugt werden, dass das gesamte Aufreihband relativ zu dem Portionierband verschieblich gelagert ist und/oder dass die Länge des Aufreihbandes beispielsweise durch eine Ausführung als Rückzugs- oder Shuttleband veränderbar ist.

Als Portionierband eignet sich jede dem Fachmann geläufige Vorrichtung auf dem die Produkte in vorbestimmten Portionen und/oder in einem gewissen Format abgelegt und weitertransportiert werden können. Das Portionierband kann dann die vom Aufreihband ankommenden Produkte in dem gewünschten Portionsbild zu einer Verpackungsmaschine weiterfördern. Vorzugsweise ist das Portionierband ein Endlosband, das vorzugsweise in einem Maschinenrahmen angeordnet ist. Die Veränderung der Lage des Portionierbandes kann dadurch erzeugt werden, dass der gesamte Maschinenrahmen relativ zu der Übergabekante und/oder dass das Portionierband relativ zu dem Maschinenrahmen bewegt wird. Vorzugsweise ist das Portionierband als Shuttleband ausgeführt.

Weiterhin erfindungsgemäß wird das Portionierband entlang einer Kulisse und/oder mit einer Hebelkinematik, im Folgenden als Drehpunkt bezeichnet, gedreht und/oder geschwenkt. Diese Drehung/Schwenkung erfolgt vorzugsweise nachdem ein Format fertig auf dem Portionierband abgelegt worden ist und bevor dieses in die Verpackungsmulden eingelegt wird. Das erfindungsgemäße Verfahren hat insbesondere den Vorteil, dass Formate vor dem Einlegen in ein Format von Verpackungsmulden gedreht werden können. Dies erhöht die Flexibilität einer entsprechenden Anlage. Vorzugsweise ist das Portionierband, insbesondere die Übergabekante, relativ zu dem Drehpunkt beweglich vorgesehen.

In einer bevorzugten Ausführungsform der vorliegenden Erfindung ist die Lage der Übergabekante des Aufreihbandes und/oder des Portionierbandes in und gegen die Förderrichtung des Aufreihbandes veränderbar
In einer weiteren bevorzugten Ausführungsform der vorliegenden Erfindung ist das Portionierband mindestens in zwei vorzugsweise senkrecht aufeinander stehenden Richtungen beweglich ausgebildet, insbesondere relativ zu dem Drehpunkt des Portionierbandes.

Vorzugsweise ist die Übergabekante an dem Aufreihband und/oder dem Portionierband in einer Führung verschieblich gelagert, wobei die Verschiebung vorzugsweise durch einen Servomotor erfolgt. In diesem Fall muss bei dem Aufreihband und/oder Portionierband eine Kompensation der Bandlänge vorgesehen werden. Diese Ausführungsform der vorliegenden Erfindung hat den Vorteil, dass die genaue Position des Endes des Aufreihbandes/Portionierbandes jederzeit elektronisch ermittelbar ist. Sie erlaubt eine stufenlose Positionierung der abzulegenden Produkte/Portionen auf dem Positionierband und/oder in der jeweiligen Verpackungsmulde. Eine verschieblich gelagerte Übergabekante hat weiterhin den Vorteil, dass die Produkte von dem Aufreihband auf das Portionierband und/oder von dem Portionierband in die Verpackungsmulde durch einen schnellen Rückhub, vorzugsweise bei konstanter Transportgeschwindigkeit des Aufreihbandes, übergeben werden können. Diese Ausführungsform der vorliegenden Erfindung bewirkt eine Reduzierung des Kippeffektes der Produkte während deren parabelförmiger Flugbahn.

Weiterhin erfindungsgemäß ist das Portionierband auch ein Einlegeband. In diesem Fall können auf dem Portionierband ein oder mehrere Formate erzeugt werden, beispielsweise zu einer Verpackungsmaschine transportiert und dann mit dem Portionierband in Verpackungen eingelegt. Da das Portionierband auch als Einlegeband genutzt wird, ist es vorteilhaft, wenn dessen eines Ende verschieblich gelagert ist, so dass das Portionierband verlängert und verkürzt werden kann. Besonders bevorzugt ist das Portionierband als sogenanntes Rückzugs- oder Shuttleband ausgeführt, so dass die Produkte mit einem schnellen Rückhub des Portionierbandes in die Verpackungsmulden eingelegt werden können. Ganz besonders bevorzugt erfolgt die Verschiebung des besagten Endes durch einen Servomotor, wobei das Band bei dem Rückzug vorzugsweise stillsteht. Diese Ausführungsform der vorliegenden Erfindung hat den Vorteil, dass dessen Positionierung sehr exakt erfolgt und dass die genaue Position des Endes des Portionierbandes jederzeit elektronisch ermittelbar ist.

Weiterhin bevorzugt erfolgt der Antrieb des Aufreihbandes und/oder des Portionierbandes ebenfalls jeweils durch einen Servomotor, so dass die Bewegungen der Bänder sehr genau steuerbar sind und durch einen Geber an eine zentrale Steuereinheit übermittelt werden können.

Vorzugsweise wird das Portionierband zum Einlegen der Portion um 90° gedreht.

Vorzugsweise sind das Aufreihband und das Portionierband zum Erstellen der Portion und/oder des Formats parallel ausgerichtet sind.

Ein weiterer Gegenstand der vorliegenden Erfindung ist eine Vorrichtung zur Erzeugung beliebiger Portionen und/oder Formate von Produkten, mit einem Aufreihband, das die Produkte fördert und an einer Übergabekante an ein Portionierband übergibt, mit dem die Produkte als entsprechende Portionen und/oder in dem jeweiligen Format weiter gefördert werden, wobei
- die Lage der Übergabekante relativ zum Portionierband mindestens in einer Richtung veränderbar ist und/oder
- die Lage des Portionierbandes mindestens in einer Richtung relativ zur Übergabekante beweglich ausgebildet ist und
wobei das Portionierband entlang einer Kulisse und/oder einer Hebelkinematik drehbar und/oder schwenkbar vorgesehen ist.

Die zu diesem Gegenstand der vorliegenden Erfindung gemachten Ausführungen gelten für das erfindungsgemäße Verfahren gleichermaßen und umgekehrt.

Vorzugsweise ist die Drehachse vertikal ausgerichtet.

Vorzugsweise werden das Aufreihband und/oder das Portionierband so bewegt, dass mit den Produkten beliebige Portionen und/oder Formate erzeugbar sind,

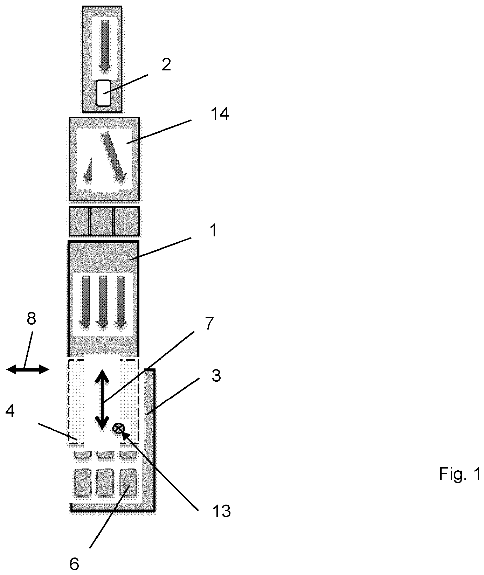

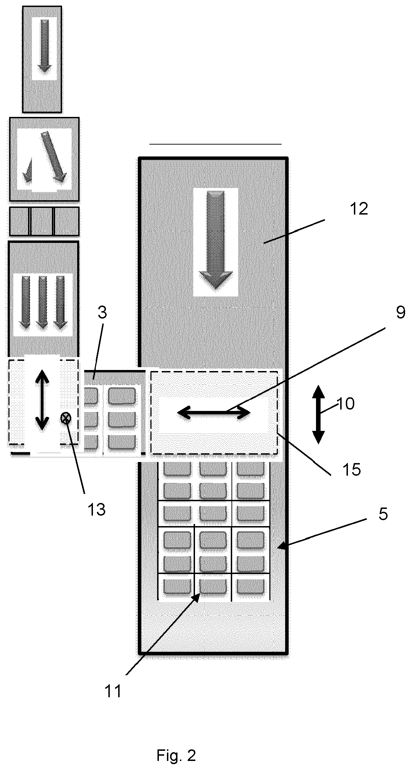

Im Folgenden wird die Erfindung anhand der Figuren 1 und 2 erläutert. Diese Erläuterungen sind lediglich beispielhaft und schränken den allgemeinen Erfindungsgedanken nicht ein. Die Erläuterungen gelten gleichsam für die erfindungsgemäße Vorrichtung, das erfindungsgemäße System sowie das erfindungsgemäße Verfahren.

### Figuren 1 und 2 zeigen eine Ausgestaltungsform der erfindungsgemäßen Vorrichtung

Figuren 1 und 2 zeigen eine Ausgestaltungsform der erfindungsgemäßen Vorrichtung mit einem Aufreihband 1 und einem Portionierband 3. Der ankommende Produktstrom 2 (nur ein Produkt dargestellt) kann mit einem Vorverteiler 14 auf mehrere Reihen aufgeteilt werden. Diese Produktreihen werden in dem vorliegenden Fall auf dem Aufreihband zu einem Format konfiguriert. Der Fachmann versteht, dass der Vorverteiler nur optional vorhanden ist. Das Format kann auch durch die Pfeile 7, 8 dargestellte Bewegung des Aufreihbandes erzeugt werden. Die Übergabe des Formates an das Portionierband 3 erfolgt durch einen schnellen Rückzug der Übergabekante 4 des Aufreihbandes. Sobald eine gewünschte Anzahl an Portionen auf dem Portionierband abgelegt worden ist, wird dieses um die Drehachse 13 gedreht und mindestens ein Format an Portionen wird in ein entsprechendes Format 5 an Verpackungsmulden 11, die bei einem Takt der Verpackungsmaschine weitertransportiert werden, eingelegt. Dies erfolgt durch einen schnellen Rückzug der Vorderkante des Portionierbandes. In dem vorliegenden Fall werden bei jedem Takt 3 × 3 Portionen in Verpackungsmulden eingelegt. Die durch die Pfeile 9, 10 dargestellte Bewegung des Portionierbandes, insbesondere relativ zu der Drehachse 13 kann zur Ausrichtung des Formates auf dem Portionierband und oder zur Ausrichtung des Portionierbandes relativ zu dem Aufreihband und/oder zu den Verpackungsmulden eingesetzt werden.

Es ist deutlich zu erkennen, dass das Format und die Portionen vor der Drehung des Portionierbandes (Fig. 1) noch falsch ausgerichtet sind. Erst durch die Drehung des Portionierbandes sind das Format an Portionen und das Format an Verpackungsmulden gleich ausgerichtet.

### Bezugszeichenliste:

- 1: Aufreihband
- 2: Produkt
- 3: Portionierband
- 4: Übergabekante
- 5: Format
- 6: Portion
- 7: Bewegungsrichtung
- 8: Bewegungsrichtung
- 9: Bewegungsrichtung
- 10: Bewegungsrichtung
- 11: Verpackungsmulde
- 12: Verpackungsmaschine
- 13: Drehpunkt
- 14: Verteiler

## Patentansprüche

1. Verfahren zur Erzeugung beliebiger Portionen (6) und Formate (5) von Produkten (2), mit einem Aufreihband (1), das die Produkte (2) fördert und an einer Übergabekante (4) an ein Portionierband (3) übergibt, mit dem die Produkte als entsprechende Portion (6) und/oder in dem jeweiligen Format (5) weiter gefördert werden, wobei
- die Lage der Übergabekante (4) relativ zum Portionierband (3) mindestens in einer Richtung (7, 8) verändert wird und/oder
- die Lage des Portionierbandes (3) mindestens in einer Richtung (9, 10) relativ zur Übergabekante bewegt wird und
- und die erzeugten Formate (5) in ein entsprechendes Format an Verpackungsmulden (11), die entlang einer Verpackungsmaschine (12) transportiert werden, eingelegt werden,
dadurch gekenzeichnet dass das Portionsband vor dem Finlegen der Portionen entlang einer Kulisse und/oder einer Hebelkinematik gedreht wird.

2. Verfahren nach Anspruch 1, **dadurch gekennzeichnet, dass** das Portionierband (3) um 90° gedreht wird.

3. Verfahren nach Anspruch 1 oder 2, **dadurch gekennzeichnet, dass** das Aufreihband (1) und das Portionierband (3) als Rückzugsband ausgeführt werden.

4. Verfahren nach einem der voranstehenden Ansprüche, **dadurch gekennzeichnet, dass** das Aufreihband (1) und das Portionierband (3) zum Erstellen der Portion und/oder des Formats parallel zueinander ausgerichtet werden.

5. Verfahren nach einem der voranstehenden Ansprüche, **dadurch gekennzeichnet, dass** das Portionierband (3) zumindest teilweise relativ zu einem Drehpunkt (13) bewegt wird.

6. Verfahren nach Anspruch 5, **dadurch gekennzeichnet, dass** das sich das Portionierband beim Einlegen der Portionen in die Verpackungsmulden bewegt.

7. Vorrichtung zur Erzeugung beliebiger Portionen (6) und Formate (5) von Produkten (2), mit einem Aufreihband (1), das die Produkte (2) fördert und an einer Übergabekante (4) an ein Portionierband (3) übergibt, mit dem die Produkte als entsprechende Portionen (6) und/oder in dem jeweiligen Format (5) weiter gefördert werden, wobei
- die Lage der Übergabekante (4) relativ zum Portionierband (3) mindestens in einer Richtung (7, 8) veränderbar ist und/oder
- die Lage des Portionierbandes (3) mindestens in einer Richtung (9, 10) relativ zur Übergabekante beweglich ausgebildet ist und
**dadurch gekennzeichnet, dass** das Portionierband (3) entlang einer Kulisse und/oder einer Hebelkinematik drehbar und/oder schwenkbar vorgesehen ist.

8. Vorrichtung nach Anspruch 7, **dadurch gekennzeichnet, dass** Portionierband (3) zumindest teilweise relativ zu einem Drehpunkt (13) entlang mindestens einer Bewegungsrichtung (9, 10) beweglich vorgesehen ist.

## Claims

1. Method for producing any desired portions (6) and formats (5) of products (2), with a lining-up belt (1) which conveys the products (2) and transfers them, at a transfer edge (4), to a portioning belt (3), by which the products are conveyed onwards in the form of a corresponding portion (6) and/or in the respective format (5), wherein
- the position of the transfer edge (4) is altered relative to the portioning belt (3) at least in one direction (7, 8), and/or
- the position of the portioning belt (3) is moved at least in one direction (9, 10) relative to the transfer edge, and
- the formats (5) produced are inserted into a corresponding format in packaging trays (11), which are transported along a packaging machine (12),
**characterized in that**, prior to the portions being inserted, the portioning belt is rotated along a guide track and/or a kinematic lever mechanism.

2. Method according to Claim 1, **characterized in that** the portioning belt (3) is rotated through 90°.

3. Method according to Claim 1 or 2, **characterized in that** the lining-up belt (1) and the portioning belt (3) are designed in the form of a retraction belt.

4. Method according to one of the preceding claims, **characterized in that**, for the purpose of producing the portion and/or the format, the lining-up belt (1) and the portioning belt (3) are oriented parallel to one another.

5. Method according to one of the preceding claims, **characterized in that** the portioning belt (3) is moved at least to some extent relative to a point of rotation (13) .

6. Method according to Claim 5, **characterized in that** the portioning belt moves as the portions are being inserted into the packaging trays.

7. Apparatus for producing any desired portions (6) and formats (5) of products (2), with a lining-up belt (1) which conveys the products (2) and transfers them, at a transfer edge (4), to a portioning belt (3), by which the products are conveyed onwards, in the form of corresponding portions (6) and/or in the respective format (5), wherein
- the position of the transfer edge (4) can be altered relative to the portioning belt (3) at least in one direction (7, 8), and/or
- the position of the portioning belt (3) is movable at least in one direction (9, 10) relative to the transfer edge, and
**characterized in that** the portioning belt (3) is provided so as to be rotatable and/or pivotable along a guide track and/or a kinematic lever mechanism.

8. Apparatus according to Claim 7, **characterized in that** the portioning belt (3) is provided to be movable along at least one movement direction (9, 10) at least to some extent relative to a point of rotation (13).

## Revendications

1. Procédé de production de portions (6) et formats (5) quelconques de produits (2) au moyen d'une bande de rangement côte à côte (1) qui transporte les produits (2) et les transfère au niveau d'un bord de transfert (4) à une bande de portionnement (3) au moyen de laquelle les produits sont emportés sous la forme d'une portion correspondante (6) et/ou dans le format respectif (5),
- la position du bord de transfert (4) par rapport à la bande de portionnement (3) étant modifiée au moins dans une direction (7, 8), et/ou
- la position de la bande de portionnement (3) étant déplacée par rapport au bord de transfert au moins dans une direction (9, 10), et
- et les formats produits (5) étant insérés dans un format correspondant de barquettes de conditionnement (11) qui sont transportées le long d'une machine de conditionnement (12),
**caractérisé en ce que** la bande de portionnement est tournée le long d'une coulisse et/ou d'une cinématique à levier avant l'insertion des portions.

2. Procédé selon la revendication 1, **caractérisé en ce que** la bande de portionnement (3) est tournée de 90°.

3. Procédé selon la revendication 1 ou 2, **caractérisé en ce que** la bande de rangement côté à côte (1) et la bande de portionnement (3) sont réalisées sous la forme d'une bande de retrait.

4. Procédé selon l'une des revendications précédentes, **caractérisé en ce que** la bande de rangement côte à côte (1) et la bande de portionnement (3) sont orientées parallèlement l'une à l'autre pour créer la portion et/ou le format.

5. Procédé selon l'une des revendications précédentes, **caractérisé en ce que** la bande de portionnement (3) est déplacée au moins en partie par rapport à un centre de rotation (13).

6. Procédé selon la revendication 5, **caractérisé en ce que** la bande de portionnement se déplace lorsque les portions sont insérées dans les barquettes de conditionnement.

7. Dispositif de production de portions (6) et formats (5) quelconques de produits (2), ledit dispositif comprenant une bande de rangement côte à côte (1) qui transporte les produits (2) et les transfère au niveau d'un bord de transfert (4) à une bande de portionnement (3) au moyen de laquelle les produits sont emportés sous la forme de portions correspondantes (6) et/ou dans le format respectif (5),
- la position du bord de transfert (4) par rapport à la bande de portionnement (3) étant modifiée au moins dans une direction (7, 8), et/ou
- la position de la bande de portionnement (3) étant prévue pour être mobile au moins dans une direction (9, 10) par rapport au bord de transfert, et
**caractérisé en ce que** la bande de portionnement (3) est prévue de façon à pouvoir tourner et/ou pivoter le long d'une coulisse et/ou d'une cinématique à levier.

8. Dispositif selon la revendication 7, **caractérisé en ce que** la bande de portionnement (3) est prévue pour être mobile au moins en partie par rapport à un centre de rotation (13) le long d'au moins une direction de mouvement (9, 10).
